# EUROPEAN PATENT APPLICATION

(11) **EP 4 668 156 A1**
(43) Date of publication of application: **24.12.2025**
(21) Application number: 23923022.0
(22) Date of filing: 14.07.2023
(51) Int. Cl.: G06F 30/27, G06F 30/17, F22B 35/18, G06F 111/04, G06F 119/08, G06F 111/10

(54) **COMBUSTION STATE PREDICTION DEVICE FOR POWER PLANT BOILER AND METHOD THEREOF**

(30) Priority: 16.02.2023 KR 20230020551
(71) Applicant: Korea Electric Power Corporation, Naju-si, Jeollanam-do 58322 (KR); Korea South-East Power Co., Ltd., Jinju-si, Gyeongsangnam-do 52852 (KR); Korea Midland Power Co. Ltd., Boryeong-si, Chungcheongnam-do 33439 (KR); Korea Western Power Co. Ltd., Taean-gun, Chungcheongnam-do 32140 (KR); Korea South Power Co., Ltd., Busan 48400 (KR); Korea East-West Power Co., Ltd., Jung-gu Ulsan 44543 (KR)
(72) Inventor: KIM, Hee Sun, Daejeon 34056 (KR); CHOI, Nak Jeong, Daejeon 34056 (KR); KIM, Bum Shin, Daejeon 34056 (KR); PARK, Myung Soo, Daejeon 34056 (KR); LEE, Chang Min, Daejeon 34056 (KR)
(74) Representative: Zacco Sweden AB
(86) International application number: PCT/KR2023/010097
(87) International publication number: WO 2024/172221

(57) **Abstract**

The present invention provides a combustion state prediction device for a power plant boiler and a method thereof. The combustion state prediction device for a power plant boiler of the present invention includes: an operation variable input module for receiving an operation variable for operation of the boiler; an operation information database for storing operation information of the boiler; an output module for displaying prediction data; and a processor operatively coupled to the operation variable input module, the operation information database, and the output module, wherein the processor operates an execution program to predict a combustion state of the boiler on the basis of a prediction model based on an operation variable input from the operation variable input module and operation information of the boiler stored in the operation information database, and output prediction data through the output module.

## Description

### [Technical Field]

The present invention relates to a device and method for predicting a combustion state of a power plant boiler, and more particularly, to a device and method for predicting a combustion state of a power plant boiler that enable a combustion state inside a boiler in a coal-fired power plant to be predicted and monitored in real time through a prediction model made based on a physical model.

### [Background Art]

Generally, in the case of a boiler of a coal-fired power plant, an exothermic reaction that occurs when coal is burned is used to heat water and produce steam necessary for power generation, and the steam produced in this way is used to rotate a turbine to produce electricity.

Combustion is a phenomenon in which a substance burns with a lot of heat and light using oxygen in the air as a medium, and a combustion process is a relatively complex physical phenomenon that consists of a chain of chemical reactions and mostly generates turbulent flow.

In the case of large-scale external combustion engines such as coal-fired power plants, combustion takes place inside a boiler, and the temperature of combustion gas reaches 1,500 to 2,000 °C, and ash and other combustion by-products flow along with the gas at high speed, making it very difficult to directly monitor a combustion state inside the boiler.

However, when a problem such as incomplete combustion, flame concentration, or the like occurs in a wide combustion area, this problem may have a significant ripple effect on the entire power plant like causing a decrease in the thermal efficiency and reliability of the entire power plant.

As described above, despite the importance of stable combustion, it has been impossible to identify the combustion state inside the boiler in real time previously, and thus the best solution is to estimate the combustion state using some data measured at a boiler heat transfer portion or outlet of a furnace, or to install a special camera on a part of a burner to perform only local monitoring.

In the related art of the present invention, Korean Patent Registration No. 10-2363444 (Published on February 16, 2022, Apparatus and method for selecting optimal boiler combustion model) is disclosed.

### [Detailed Description of Invention]

### [Technical Problem]

To overcome such problems, in the case of combustion-based facilities such as thermal power plants, a method such as computational thermal fluid analysis is utilized to indirectly predict and diagnose a combustion phenomenon occurring inside a facility by simulating a physical phenomenon occurring within the corresponding facility.

However, computational thermal fluid analysis requires exponentially more computational resources and expertise as the structure of the facility becomes more complex and the scale increases, and the number of combustion chemical reactions increases, and the analysis takes several days. Therefore, the computational thermal fluid analysis is often used only in the design stage, and there is a problem in that it is difficult to use the computational thermal fluid analysis to monitor a current state of the facility during the facility operation management stage.

The present invention has been made to solve the above problems, and the present invention is directed to providing a device and method for predicting a combustion state of a power plant boiler, which receive power plant operation data and operation variables through a prediction model made based on a physical model to enable a combustion state inside a boiler in a coal-fired power plant to be predicted and monitored in real time.

### [Technical Solution]

A combustion state prediction device for a power plant boiler according to one aspect of the present invention includes an operation variable input module configured to receive an operation variable for operation of a boiler, an operation information database configured to store operation information of the boiler, an output module configured to display prediction data, and a processor operatively coupled to the operation variable input module, the operation information database, and the output module, wherein the processor runs an execution program to predict a combustion state of the boiler through a prediction model on the basis of the operation variable input through the operation variable input module and the operation information of the boiler that is stored in the operation information database, and output the prediction data through the output module.

In the present invention, the operation variable may include one or more of an amount of input coal, opening degrees of a primary air nozzle and a secondary air nozzle, tilt and yaw angles of burners, whether the burner of each layer is turned on/off, and a calorific value of the input coal.

In the present invention, the operation information may include operation data obtained from a measuring device installed in the boiler and control data used to control the boiler.

In the present invention, the prediction model may be a model generated through machine learning on the basis of a physical model for predicting a combustion phenomenon in the boiler.

In the present invention, the prediction data may include one or more of spatial coordinates inside the boiler, physical characteristic values corresponding to a location of the spatial coordinates, an air flow rate of the secondary air nozzle, a contour image of a physical quantity distribution for an entire space inside the boiler, and physical characteristic values measured by the measuring device.

The present invention may further include a simulation condition input module configured to receive simulation operation conditions of the boiler, wherein the processor may predict the combustion state of the boiler through the prediction model on the basis of the simulation operation conditions input through the simulation condition input module and the operation information of the boiler that is stored in the operation information database.

The present invention may further include an optimization condition input module configured to receive optimization conditions of the boiler, wherein the processor may derive an optimal operation variable satisfying the optimization conditions input through the optimization condition input module through an optimization model and predict the combustion state of the boiler through the prediction model on the basis of the optimal operation variable and the operation information of the boiler that is stored in the operation information database.

A method of predicting the combustion state of the power plant boiler according to another aspect of the present invention includes running, by a processor, an execution program to receive an operation variable for operation of a boiler through an operation variable input module, receive operation information of the boiler from a measuring device, and store the operation information of the boiler in an operation information database, predicting, by the processor, a combustion state of the boiler through a prediction model on the basis of the operation variable and the operation information, and outputting, by the processor, prediction data obtained by predicting the combustion state through an output module.

In the present invention, the operation variable may include one or more of an amount of input coal, opening degrees of a primary air nozzle and a secondary air nozzle, tilt and yaw angles of burners, whether the burner of each layer is turned on/off, and a calorific value of the input coal.

In the present invention, the operation information may include operation data obtained from a measuring device installed in the boiler and control data used to control the boiler.

In the present invention, the prediction model may be a model generated through machine learning on the basis of a physical model for predicting a combustion phenomenon in the boiler.

In the present invention, the prediction data may include one or more of spatial coordinates inside the boiler, physical characteristic values corresponding to a location of the spatial coordinates, an air flow rate of the secondary air nozzle, a contour image of a physical quantity distribution for an entire space inside the boiler, and physical characteristic values measured by the measuring device.

In the present invention, the predicting of the combustion state of the boiler may include receiving, by the processor, simulation operation conditions input through a simulation condition input module, and predicting, by the processor, the combustion state of the boiler through the prediction model on the basis of the simulation operation conditions input through the simulation condition input module and the operation information of the boiler that is stored in the operation information database.

In the present invention, the predicting of the combustion state of the boiler may include receiving, by the processor, optimization conditions of the boiler from an optimization condition input module, deriving, by the processor, an optimal operation variable satisfying the optimization conditions through an optimization model and predicting, by the processor, the combustion state of the boiler through the prediction model on the basis of the optimal operation variable and the operation information of the boiler that is stored in the operation information database.

### [Advantageous Effects]

According to a device and method for predicting a combustion state of a power plant boiler according to an aspect of the present invention, by enabling a combustion state inside a boiler in a coal-fired power plant to be predicted and monitored in real time by receiving operation data and operation variables of a power plant through a prediction model made based on a physical model, it is possible to check a temperature distribution and flow rate inside the boiler to analyze a cause of a failure and to suggest solutions for preventing high temperature or an increase in flow rate in specific areas.

Further, according to the present invention, combustion tuning allows for reviewing and simulating various operation conditions to stabilize combustion in the boiler in various situations, such as ammonia co-firing, wood-based fuel, and low-calorie coal, and thus it is possible to rapidly respond to environmental changes, such as the introduction of new fuels, flexible operation, etc., while maintaining a stable power supply.

Further, according to the present invention, by checking the efficiency of the boiler under various combustion conditions and analyzing the causes of reduced efficiency to optimize a secondary air distribution amount under various loads, it is possible to achieve the best efficiency under any conditions and contribute to economic efficiency and environmental friendliness.

Further, according to the present invention, by tracing incomplete combustion within a combustion area and identifying an area in which pollutants such as NOₓ are generated, it is possible to find operation conditions that ultimately minimize pollutants emitted through detailed combustion tuning.

### [Description of Drawings]

FIG. 1 is a block diagram illustrating a device for predicting a combustion state of a power plant boiler according to one embodiment of the present invention.
FIG. 2 is an exemplary diagram showing the results obtained by a device for predicting a combustion state of a power plant boiler according to one embodiment of the present invention by querying a combustion state.
FIG, 3 is an exemplary diagram showing the results obtained by a device for predicting a combustion state of a power plant boiler according to one embodiment of the present invention by querying a state of a secondary air inlet.
FIG. 4 is a flowchart for describing a method of predicting a combustion state of a power plant boiler according to one embodiment of the present invention.
FIG. 5 is a flowchart for describing a method of predicting a combustion state of a power plant boiler according to another embodiment of the present invention.
FIG. 6 is a flowchart for describing a method of predicting a combustion state of a power plant boiler according to still another embodiment of the present invention.

### [Modes of the Invention]

Hereinafter, a device and method for predicting a combustion state of a power plant boiler according to the present invention will be described with reference to the accompanying drawings. In this process, thicknesses of lines, sizes of components, and the like illustrated in the drawings may be exaggerated for clarity and convenience of description. Further, some terms which will be described below are defined in consideration of functions in the present invention and meanings may vary depending on, for example, a user or operator's intentions or customs. Therefore, the meanings of these terms should be interpreted based on the contents throughout this specification.

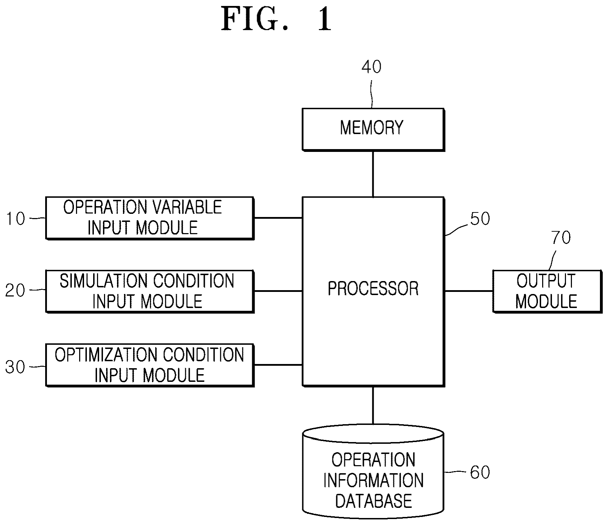

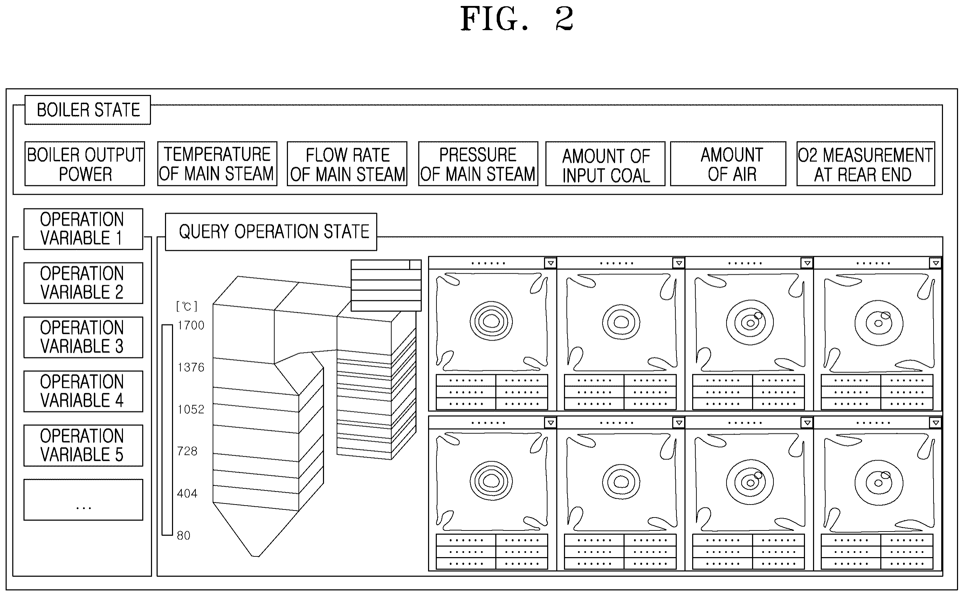

FIG. 1 is a block diagram illustrating a device for predicting a combustion state of a power plant boiler according to one embodiment of the present invention, FIG. 2 is an exemplary diagram showing the results obtained by the device for predicting the combustion state of the power plant boiler according to one embodiment of the present invention by querying a combustion state, and FIG, 3 is an exemplary diagram showing the results obtained by the device for predicting the combustion state of the power plant boiler according to one embodiment of the present invention by querying a state of a secondary air inlet.

As illustrated in FIG. 1, the device for predicting the combustion state of the power plant boiler according to one embodiment of the present invention may include an operation variable input module 10, an operation information database 60, an output module 70, a memory 40, and a processor 50, as well as a simulation condition input module 20 and an optimization condition input module 30.

The operation variable input module 10 may receive operation variables for operating by manipulating a combustion environment of an actual boiler.

In the case of a coal-fired boiler, there may be many operation variables, and the operation variables may include, for example, an amount of input coal, opening degrees of primary and secondary air nozzles, tilt and yaw angles of burners, whether the burner of each layer is turned on/off, a calorific value of the input coal, etc.

The operation variables input in this manner may be reflected in the operation of the boiler and may be stored in the operation information database 60.

The simulation condition input module 20 may receive simulation operation conditions of the boiler.

That is, when there is a problem with the current operation conditions under which the boiler is actually operating or when improved conditions are to be found, new virtual operation conditions may be input as the simulation operation conditions.

The optimization condition input module 30 may receive optimization conditions of the boiler.

That is, the optimization conditions for optimizing the operation variables, for example, a temperature range of a furnace outlet of the boiler, and a heat transfer amount range of each heat transfer portion, may be set, and an operation variable for minimizing a concentration of NOx at the furnace outlet may be set as the optimization condition.

Further, among key operation variables, allowable ranges of values of variables to be maintained may also be set. For example, an output power may be set to 500 MW ±5%.

The operation information database 60 may store operation information of the boiler.

Here, the operation information may include operation data obtained in real time from a measuring device installed in the boiler and control data used to control the boiler. In this case, the operation information database 60 may include a data communication function, that is, a function that can provide data to another program and record data provided by another program.

The output module 70 may display prediction data. That is, the output module 70 may refine the prediction data, convert the refined prediction data into information forms such as images, graphs, and the like that can be intuitively accepted by the user, and display the converted information, and in addition, the output module 70 may also display key operation information such as values of each operation variable of the boiler, outputs of the boiler, etc.

The memory 40 may store an execution program and a learning model that are related to the operation of the device for predicting the combustion state of the power plant boiler, and the stored information may be selected by the processor 50 as needed.

That is, various types of data and commands that are generated during a process of executing an operating system (O/S) or an application (program or applet) for driving the device for predicting the combustion state of the power plant boiler are stored in the memory 40. In this case, the memory 40 may be implemented as a non-volatile memory, a volatile memory, a flash memory, a hard disk drive (HDD), a solid state drive (SSD), or the like. Further, the memory 40 may be accessed, and the data may be read/recorded/modified/deleted/updated, and the like by the processor 50.

The memory 40 may store a prediction model for predicting a combustion state.

Here, the prediction model may receive the operation variables in real time to predict a combustion phenomenon inside the boiler. That is, the prediction model is a model that outputs physical behavior that is as similar as possible to that of the actual boiler when the operation variables are input and may be called a virtual boiler or a twin model of the boiler. Therefore, the prediction model may be a model made by learning an output of a model generated through necessary physical models such as thermodynamics, fluid dynamics, and chemical models to predict the combustion phenomenon or multiple outputs, by a method such as machine learning or the like.

Further, the prediction model may include not only the inside of the boiler but also both an inlet of each nozzle through which secondary air is sprayed and a portion that controls its opening degree in order to predict the boiler combustion phenomenon more accurately, and a calculation result of this prediction model becomes an air flow rate for each secondary air nozzle.

Meanwhile, the memory 40 may store an optimization model that can derive optimal values that satisfy conditions for the operation variables of interest as much as possible by inputting optimization conditions.

Here, the optimization model is a model made based on the prediction model, and for example, when the optimization conditions, such as maintaining the heat transfer amount, minimizing the concentration of NOₓ at the outlet, and maintaining the output power of 500 MW ±5% from the power plant, are input, the optimization model may derive values of operation variables that satisfy the conditions within a preset margin, such as an excess air ratio of 1.14, an upper inlet secondary air nozzle damper opening degree of 78%, and a lower burner secondary air nozzle damper opening degree of 65%.

Alternatively, the optimization model may only suggest the direction in which specific variables should be increased or decreased when attempting to minimize the concentration of NOₓ at the outlet.

The processor 50 may be operatively coupled to the operation variable input module 10, the simulation condition input module 20, the optimization condition input module 30, the operation information database 60, the output module 70, and the memory 40, and may copy various types of programs stored in the memory 40 and execute the programs to perform various types of operations, in order to control the overall operation of the device for predicting the combustion state of the power plant boiler.

Here, although the processor 50 is described as including only one central processing unit (CPU), the processor 50 may be implemented with a plurality of CPUs (or digital signal processors (DSPs), system on chips (SoCs), etc.).

In various embodiments, the processor 50 may be implemented as a DSP that processes digital signals, a microprocessor, or a time controller (TCON). However, the present invention is not limited thereto, and the processor 50 may include one or more of a CPU, a micro controller unit (MCU), a micro processing unit (MPU), a controller, an application processor (AP), a communication processor (CP), or an advanced reduced instruction set computer (RISC) machine (ARM) processor, or may be defined by the corresponding terms. Further, the processor 50 may be implemented as an SoC with a built-in processing algorithm or a large scale integration (LSI) or may be implemented in the form of a field programmable gate arrays (FPGA).

That is, the processor 50 may run an execution program to predict a combustion state of the boiler through the prediction model on the basis of the operation variables input through the operation variable input module 10 and the operation information of the boiler that is stored in the operation information database 60, and output prediction data through the output module 70.

Here, the processor 50 may predict spatial coordinates inside the boiler and physical characteristic values corresponding to a location of the spatial coordinates as the prediction data.

In this case, the physical characteristic values corresponding to the location of the spatial coordinates may include a temperature inside the boiler, concentrations of chemical species of interest that a user wants to monitor, such as oxygen, carbon dioxide, and the like, and a flow rate of gas.

Further, when the prediction model includes a secondary air inlet, the prediction data may include an air flow rate for each secondary air nozzle.

In addition, the processor 50 may predict not only real values as prediction data, but also contour images of a three-dimensional distribution of physical quantities for the entire space of the boiler or a two-dimensional distribution of physical quantities for a part of the space, as provided by typical computational thermal fluid analysis results, and may calculate physical characteristic values measured by the measuring device as the prediction data to verify the reliability of the prediction model itself. For example, an average temperature of gas at the corresponding location may be calculated as the prediction data through the prediction model in order to compare the average temperature with a temperature of a temperature sensor installed at an outlet of a furnace of a coal-fired boiler.

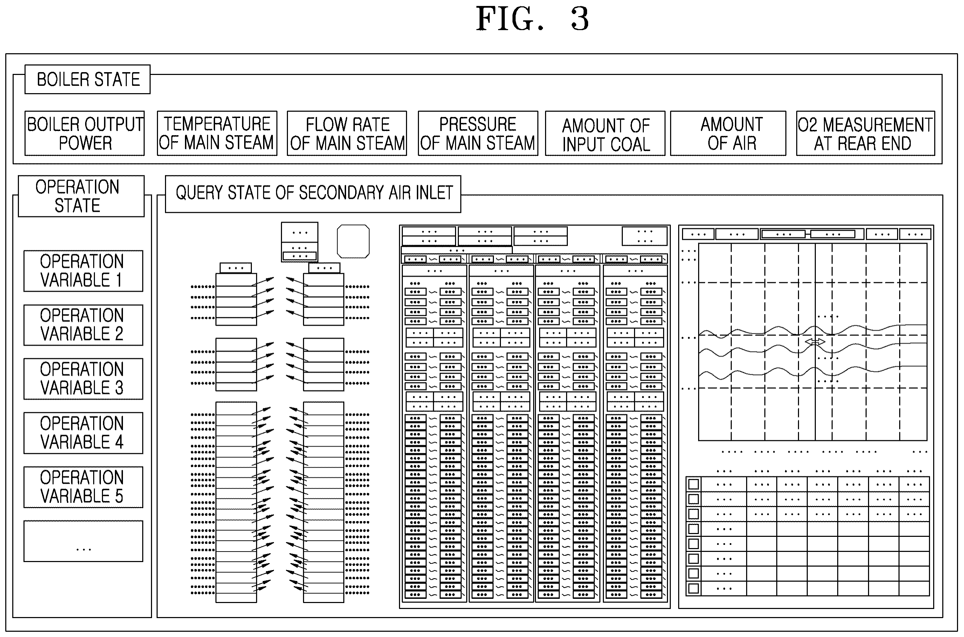

The processor 50 may convert the prediction data obtained by predicting the combustion state in this way into information forms such as images, graphs, and the like that can be intuitively accepted by the user through the output module 70 as shown in FIGS. 2 and 3, and display a state of the boiler, an operation state of the boiler, and query results.

For example, when the combustion state of the boiler is queried as illustrated in FIG. 2, a section may display operation information indicating a current state of the boiler, a section may display data of operation variables that set operation conditions of the boiler, and a section may display a combustion state generated by utilizing the prediction data.

Further, as illustrated in FIG. 3, the results of querying a state of the secondary air inlet may be displayed.

Meanwhile, the processor 50 may receive the simulation operation conditions through the simulation condition input module 20, predict the combustion state of the boiler through the prediction model on the basis of the simulation operation conditions and the operation information of the boiler that is stored in the operation information database 60, and generate the prediction data.

Therefore, not only a real-time combustion state according to the operation variables of the boiler, but also possible future operation conditions may be received as simulation conditions, and output through the output module 70 to be compared, reviewed and improved in terms of combustion.

On the other hand, the processor 50 may derive optimal operation variables that can satisfy the optimization conditions input through the optimization condition input module 30 through an optimization model, and output the prediction data obtained by predicting the combustion state of the boiler through the prediction model on the basis of the optimal operation variables and the operation information of the boiler that is stored in the operation information database 60 through the output module 70.

That is, when the user inputs desired optimization conditions through the optimization condition input module 30, the processor 50 may automatically find optimal operation variables for achieving the optimization conditions and calculate and query the prediction data on the basis of the optimal operation variables.

Therefore, it is possible to find the optimal operation variables desired by the user and check the combustion state at that time.

For example, when the optimization conditions, such as maintaining the heat transfer amount, minimizing the concentration of NOₓ at the outlet, and maintaining the output power of 500 MW ±5% from the power plant, are set through the optimization condition input module 30, the processor 50 may derive values of the operation variables that satisfy the conditions within a preset margin, such as an excess air ratio of 1.14, an upper inlet secondary air nozzle damper opening degree of 78%, and a lower burner secondary air nozzle damper opening degree of 65%, through the optimization model.

Therefore, the processor 50 may predict the prediction data on the basis of the derived optimal operation variables and the operation information of the boiler that is stored in the operation information database 60.

Further, the processor 50 may only suggest the direction in which specific variables should be increased or decreased when attempting to minimize the concentration of NOₓ at the outlet through the optimization model.

As described above, according to the device for predicting the combustion state of the power plant boiler according to the embodiment of the present invention, by enabling a combustion state inside a boiler in a coal-fired power plant to be predicted and monitored in real time by receiving operation data and operation variables of a power plant through a prediction model made based on a physical model, not only may a cause of a failure be traced and resolved, but combustion tuning may be used to review operation conditions in various situations to stabilize combustion in the boiler and achieve the best efficiency, and incomplete combustion may be traced to minimize pollutants.

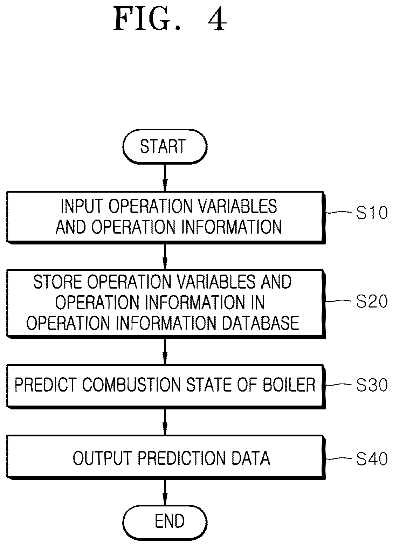

FIG. 4 is a flowchart for describing a method of predicting a combustion state of a power plant boiler according to one embodiment of the present invention.

As illustrated in FIG. 4, in the method of predicting the combustion state of the power plant boiler according to one embodiment of the present invention, a processor 50 first runs an execution program and receives operation variables for operating through an operation variable input module 10 and receives operation information of the boiler from a measuring device (S10).

Here the operation variables are conditions for operating by manipulating a combustion environment of an actual boiler, and in the case of a coal-fired boiler, the operation variables may include, for example, an amount of input coal, opening degrees of primary and secondary air nozzles, tilt and yaw angles of burners, whether the burner of each layer is turned on/off, a calorific value of the input coal, etc.

Further, the operation information may include operation data obtained in real time from a measuring device installed in the boiler and control data used to control the boiler.

In this case, an operation information database 60 may include a data communication function, that is, a function that can provide data to another program and record data provided by another program.

When the operation variables and the operation information are received in operation S10, the processor 50 stores the received operation variables and operation information in the operation information database 60 (S20).

After storing the operation variables and the operation information in operation S20, the processor predicts a combustion state of the boiler through a prediction model on the basis of the operation variables and the operation information (S30).

Here, the prediction model may receive the operation variables in real time to predict the combustion phenomenon inside the boiler. That is, the prediction model is a model that outputs physical behavior that is as similar as possible to that of the actual boiler when the operation variables are input and may be called a virtual boiler or a twin model of the boiler. Therefore, the prediction model may be a model made by learning an output of a model generated through necessary physical models such as thermodynamics, fluid dynamics, and chemical models to predict the combustion phenomenon or multiple outputs, by a method such as machine learning or the like.

Further, the prediction model may include not only the inside of the boiler but also both an inlet of each nozzle through which secondary air is sprayed and a portion that controls its opening degree in order to predict the boiler combustion phenomenon more accurately, and a calculation result of this prediction model becomes an air flow rate for each secondary air nozzle.

After predicting the combustion state of the boiler through the prediction model on the basis of the operation variables and the operation information in operation S30, the processor outputs the prediction data obtained by predicting the combustion state of the boiler through the output module (S40).

Here, the prediction data may include spatial coordinates inside the boiler and physical characteristic value corresponding to a location of the spatial coordinates.

In this case, the physical characteristic values corresponding to the location of the spatial coordinates may include a temperature inside the boiler, concentrations of chemical species of interest that a user wants to monitor, such as oxygen, carbon dioxide, and the like, and a flow rate of gas.

Further, when the prediction model includes a secondary air inlet, the prediction data may include an air flow rate for each secondary air nozzle.

In addition, the processor 50 may predict not only real values as prediction data, but also contour images of a three-dimensional distribution of physical quantities for the entire space of the boiler or a two-dimensional distribution of physical quantities for a part of the space, as provided by typical computational thermal fluid analysis results, and may calculate the physical characteristic values measured by the measuring device as the prediction data to verify the reliability of the prediction model itself. For example, an average temperature of gas at the corresponding location may be calculated as the prediction data through the prediction model in order to compare the average temperature with a temperature of a temperature sensor installed at an outlet of a furnace of a coal-fired boiler.

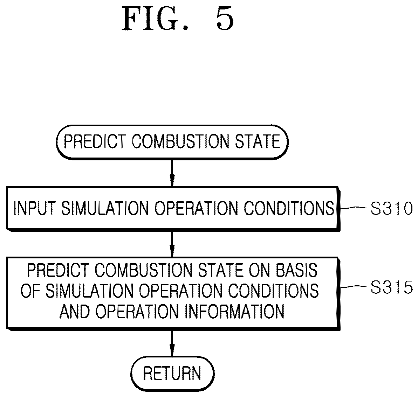

FIG. 5 is a flowchart for describing a method of predicting a combustion state of a power plant boiler according to another embodiment of the present invention.

According to another embodiment of the present invention, not only a real-time combustion state according to the operation variables of the boiler, but also possible future operation conditions may be received as simulation conditions, and output through an output module 70 to be compared, reviewed and improved in terms of combustion.

That is, as illustrated in FIG. 5, in the method of predicting the combustion state, a processor 50 may receive simulation operation conditions through a simulation condition input module 20 (S310).

That is, when there is a problem with the current operation conditions under which the boiler is actually operating or when improved conditions are to be found, new virtual operation conditions may be input as the simulation operation conditions.

Upon receiving the simulation operation conditions in operation S310, the processor 50 may predict the combustion state of the boiler through a prediction model on the basis of the simulation operation conditions and operation information of the boiler that is stored in the operation information database 60, and generate prediction data (S315).

In this way, when the combustion state of the boiler is predicted after receiving the simulation operation conditions, the simulation operation conditions may be displayed together with the prediction data according to the operation variables through the output module 70 to be compared.

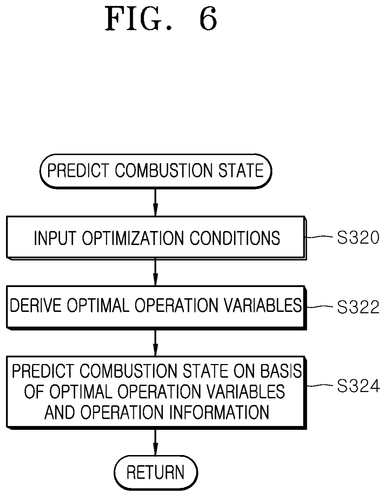

FIG. 6 is a flowchart for describing a method of predicting a combustion state of a power plant boiler according to still another embodiment of the present invention.

According to still another embodiment of the present invention, when a user inputs desired optimization conditions through an optimization condition input module 30, optimal operation variables for achieving the optimization conditions may be automatically found, and prediction data may be calculated and queried based on the optimal operation variables.

As illustrated in FIG. 6, in the method of predicting the combustion state, a processor 50 may receive optimization conditions through an optimization condition input module 30 (S320).

Upon receiving the optimization conditions in operation S320, the processor 50 derives optimal operation variables that can satisfy the optimization conditions through an optimization model (S322).

Here, the optimization model is a model made based on the prediction model, and for example, when the optimization conditions, such as maintaining the heat transfer amount, minimizing the concentration of NOₓ at the outlet, and maintaining the output power of 500 MW ±5% from the power plant, are input, the optimization model may derive values of operation variables that satisfy the conditions within a preset margin, such as an excess air ratio of 1.14, an upper inlet secondary air nozzle damper opening degree of 78%, and a lower burner secondary air nozzle damper opening degree of 65%.

Alternatively, the optimization model may only suggest the direction in which specific variables should be increased or decreased when attempting to minimize the concentration of NOₓ at the outlet.

After deriving the optimal operation variables in operation S322, the processor 50 may predict the combustion state of the boiler through a prediction model on the basis of the optimal operation variables and the operation information of the boiler that is stored in an operation information database 60, and generate prediction data (S324).

For example, when the optimization conditions, such as maintaining the heat transfer amount, minimizing the concentration of NOₓ at the outlet, and maintaining the output power of 500 MW ±5% from the power plant, are set through the optimization condition input module 30, the processor 50 may derive values of the operation variables that satisfy the conditions within a preset margin, such as an excess air ratio of 1.14, an upper inlet secondary air nozzle damper opening degree of 78%, and a lower burner secondary air nozzle damper opening degree of 65%, through the optimization model.

Further, the processor 50 may only suggest the direction in which specific variables should be increased or decreased when attempting to minimize the concentration of NOₓ at the outlet through the optimization model.

As described above, according to the method of predicting the combustion state of the power plant boiler according to the embodiment of the present invention, by enabling a combustion state inside a boiler in a coal-fired power plant to be predicted and monitored in real time by receiving operation data and operation variables of a power plant through a prediction model made based on a physical model, not only may a cause of a failure be traced and resolved, but combustion tuning may be used to review operation conditions in various situations to stabilize combustion in the boiler and achieve the best efficiency, and incomplete combustion may be traced to minimize pollutants.

The implementations described herein may be implemented, for example, as a method or process, a device, a software program, a data stream, or signals. Even when discussed only in the context of a single form of implementation (e.g., discussed only as a method), the implementation of the discussed features may also be implemented in other forms (e.g., as a device or program). The device may be implemented as suitable hardware, software, firmware, etc. The method may be implemented in a device such as a processor or the like, which generally refers to a processing device including, for example, a computer, a microprocessor, an integrated circuit, a programmable logic device, etc. The processor also includes a communication device, such as a computer, a cellular phone, a personal digital assistant (PDA), other devices, etc., which facilitate communication of information between end-users.

While the present invention has been described with reference to embodiments illustrated in the accompanying drawings, these embodiments should be considered in a descriptive sense only, and it should be understood by those skilled in the art that various alterations and equivalent other embodiments may be made.

Therefore, the scope of the present invention should be defined by the following claims.

## Claims

1. A device for predicting a combustion state of a power plant boiler, comprising:
an operation variable input module configured to receive an operation variable for operation of a boiler;
an operation information database configured to store operation information of the boiler;
an output module configured to display prediction data; and
a processor operatively coupled to the operation variable input module, the operation information database, and the output module,
wherein the processor runs an execution program to predict a combustion state of the boiler through a prediction model on the basis of the operation variable input through the operation variable input module and the operation information of the boiler that is stored in the operation information database, and output the prediction data through the output module.

2. The device of claim 1, wherein the operation variable includes one or more of an amount of input coal, opening degrees of a primary air nozzle and a secondary air nozzle, tilt and yaw angles of burners, whether the burner of each layer is turned on/off, and a calorific value of the input coal.

3. The device of claim 1, wherein the operation information includes operation data obtained from a measuring device installed in the boiler and control data used to control the boiler.

4. The device of claim 1, wherein the prediction model is a model generated through machine learning on the basis of a physical model for predicting a combustion phenomenon in the boiler.

5. The device of claim 1, wherein the prediction data includes one or more of spatial coordinates inside the boiler, physical characteristic values corresponding to a location of the spatial coordinates, an air flow rate of the secondary air nozzle, a contour image of a physical quantity distribution for an entire space inside the boiler, and physical characteristic values measured by a measuring device.

6. The device of claim 1, further comprising a simulation condition input module configured to receive simulation operation conditions of the boiler,
wherein the processor predicts the combustion state of the boiler through the prediction model on the basis of the simulation operation conditions input through the simulation condition input module and the operation information of the boiler that is stored in the operation information database.

7. The device of claim 1, further comprising an optimization condition input module configured to receive optimization conditions of the boiler,
wherein the processor derives an optimal operation variable satisfying the optimization conditions input through the optimization condition input module through an optimization model and predicts the combustion state of the boiler through the prediction model on the basis of the optimal operation variable and the operation information of the boiler that is stored in the operation information database.

8. A method of predicting a combustion state of a power plant boiler, comprising:
running, by a processor, an execution program to receive an operation variable for operation of a boiler through an operation variable input module, receive operation information of the boiler from a measuring device, and store the operation information of the boiler in an operation information database;
predicting, by the processor, a combustion state of the boiler through a prediction model on the basis of the operation variable and the operation information; and
outputting, by the processor, prediction data obtained by predicting the combustion state through an output module.

9. The method of claim 8, wherein the operation variable includes one or more of an amount of input coal, opening degrees of a primary air nozzle and a secondary air nozzle, tilt and yaw angles of burners, whether the burner of each layer is turned on/off, and a calorific value of the input coal.

10. The method of claim 8, wherein the operation information includes operation data obtained from the measuring device installed in the boiler and control data used to control the boiler.

11. The method of claim 8, wherein the prediction model is a model generated through machine learning on the basis of a physical model for predicting a combustion phenomenon in the boiler.

12. The method of claim 8, wherein the prediction data includes one or more of spatial coordinates inside the boiler, physical characteristic values corresponding to a location of the spatial coordinates, an air flow rate of the secondary air nozzle, a contour image of a physical quantity distribution for an entire space inside the boiler, and physical characteristic values measured by the measuring device.

13. The method of claim 8, wherein the predicting of the combustion state of the boiler further includes:
receiving, by the processor, simulation operation conditions input through a simulation condition input module; and
predicting, by the processor, the combustion state of the boiler through the prediction model on the basis of the simulation operation conditions input through the simulation condition input module and the operation information of the boiler that is stored in the operation information database.

14. The method of claim 8, wherein the predicting of the combustion state of the boiler further includes:
receiving, by the processor, optimization conditions of the boiler from an optimization condition input module;
deriving, by the processor, an optimal operation variable satisfying the optimization conditions through an optimization model; and
predicting, by the processor, the combustion state of the boiler through the prediction model on the basis of the optimal operation variable and the operation information of the boiler that is stored in the operation information database.
